# EUROPÄISCHE PATENTSCHRIFT

(11) **EP 3 269 573 B1**
(45) Veröffentlichungstag und Bekanntmachung des Hinweises auf die Patenterteilung: **25.11.2020**
(21) Anmeldenummer: 17168003.6
(22) Anmeldetag: 25.04.2017
(51) Int. Cl.: B60H 1/32, B60H 1/00, H02P 9/14, H02P 9/00

(54) **VERFAHREN ZUM REGELN EINES KÜHLSYSTEMS**
METHOD FOR REGULATING A COOLING SYSTEM
PROCÉDÉ DESTINÉ AU RÉGLAGE D'UN SYSTÈME DE REFROIDISSEMENT

(30) Priorität: 13.05.2016 DE 102016005981
(43) Veröffentlichungstag der Anmeldung: 17.01.2018
(73) Patentinhaber: Liebherr-Transportation Systems GmbH & Co. KG, 2100 Korneuburg (AT)
(72) Erfinder: RADLER, Dominik, 1160 Wien (AT); KITANOSKI, Filip, 1060 Wien (AT); SCHILLING, Florian, 2100 Leobendorf (AT); NITTNAUS, Ferdinand, 1210 Wien (AT); TONCHEV, Anton, 1220 Wien (AT); KOZEK, Martin, 1140 Wien (AT); LUCHINI, Elisabeth, 1090 Wien (AT)
(74) Vertreter: Laufhütte, Dieter

(56) Entgegenhaltungen:
- EP-A1- 1 780 885
- WO-A1-03/058793
- WO-A1-2016/004032

## Beschreibung

Die Erfindung betrifft ein Verfahren zum Regeln eines Kühlsystems, insbesondere zum Regeln eines Generators eines Kühlsystems. Vorzugsweise ist hierbei das Kühlsystem ein Kühlsystem für eine Transporteinheit, insbesondere für einen Kühl-Sattelauflieger, einen Kühlanhänger oder einen Kühltransportcontainer, mit mindestens einer über einen Generator angetriebenen Kühleinheit.

Bei in dem Stand der Technik bekannten Kühlsystemen wird, falls ein Zuschalten eines weiteren elektrischen Verbrauchers erforderlich ist, die maximale elektrische Leistung eines Generators des Kühlsystems berechnet und diese dann an diverse elektrische Verbraucher (inklusive des zuzuschaltenden elektrischen Verbrauchers) verteilt. Es ist also für ein erfolgreiches Zuschalten eines zusätzlichen elektrischen Verbrauchers notwendig, die maximal verfügbare elektrische Leistung des Generators zu berechnen. Diese Berechnung ist komplex und hängt von einer Vielzahl von Variablen ab.

Ziel der vorliegenden Erfindung ist es, die Berechnung der aktuellen maximal verfügbaren elektrischen Leistung des Generators überflüssig zu machen und dennoch eine verlässliche Regelung zu finden, die Klarheit darüber schafft, ob ein Zuschalten eines zusätzlichen elektrischen Verbrauchers vorgenommen werden kann oder nicht.

Die WO 2016/004032 zeigt ein Kühlsystem für einen Transportcontainer, das für die Entscheidung, ob eine zusätzliche elektrische Last zugeschaltet werden darf, die durch einen Generator maximal erzeugbare elektrische Leistung berechnet. Diese maximale elektrische Leistung wird dann auf die mehreren elektrischen Lasten inklusive der zuzuschaltenden elektrischen Last verteilt, um zu prüfen, ob die maximale elektrische Leistung des Generators ausreichend ist, um die elektrischen Lasten zu bedienen.

Die erfindungsgemäße Aufgabe wird durch das Verfahren zum Regeln eines Kühlsystems, das sämtliche Verfahrensschritte aus dem Anspruch 1 enthält, gelöst. Dadurch ist es möglich, die Regelung der Last am Generator und das Zuschalten von elektrischen Verbrauchern ohne Berechnung der aktuellen, maximal verfügbaren elektrischen Leistung des Generators vorzunehmen. Zusätzlich wird hierbei der thermische Zustand des Generators berücksichtigt, wodurch eine erhöhte Betriebssicherheit und Robustheit des Gesamtsystems gewährleistet ist.

Das erfindungsgemäße Verfahren zum Regeln eines Kühlsystems, insbesondere zum Regeln eines Generators eines Kühlsystems, zeichnet sich dadurch aus, dass in dem Verfahren ein Bedarf festgestellt wird, dem Kühlsystem eine zusätzliche elektrische Last zuzuschalten Das Zuschalten beinhaltet auch das Ändern der Last eines bereits in Betrieb befindlichen Verbrauchers durch Ändern eines Stellgliedes, eine erwartete Generatortemperatur eines Generators des Kühlsystems auf Grundlage eines thermischen Generatormodells unter Einbeziehung der zusätzlichen elektrischen Last bestimmt wird, geprüft wird, ob die erwartete Generatortemperatur unterhalb eines Generatortemperatur-Schwellenwerts liegt und falls dies nicht der Fall ist, das Kühlsystem ohne ein Zuschalten der zusätzlichen elektrischen Last weiter betrieben werden kann. Falls die erwartete Generatortemperatur unterhalb eines Generatortemperatur-Schwellenwerts liegt, wird geprüft, ob eine Generatorfrequenz oberhalb eines Generatorfrequenz-Schwellenwerts liegt. Ist dies nicht der Fall wird das Kühlsystem ohne ein Zuschalten der zusätzlichen elektrischen Last weiterbetrieben. Falls die Generatorfrequenz oberhalb eines Generatorfrequenz-Schwellenwerts liegt, wird die zusätzliche elektrische Last dem Kühlsystem zugeschalten.

Mit diesem Verfahren ist es möglich, zu bewerten, ob ein zusätzlicher elektrischer Verbraucher in das elektrische Netz des Kühlsystems zugeschalten werden kann. Ein Bestandteil dieser Bewertung erfolgt durch das Nutzen bzw. Lösen eines thermischen Generatormodells, das die erwartete Generatortemperatur bei einem Zuschalten der zusätzlichen elektrischen Last bestimmt. Anhand der erwarteten Generatortemperatur lässt sich abschätzen, ob ein Zuschalten der zusätzlichen elektrischen Last den Generator oberhalb eines Generatortemperatur-Schwellenwerts heben würde. Wäre dies der Fall, würde also die Generatortemperatur oberhalb eines bestimmten Schwellenwerts nach einem Zuschalten der zusätzlichen elektrischen Last liegen, folgend wird die zusätzliche elektrische Last nicht hinzugeschalten und das Kühlsystem ohne diese zusätzliche Last weiterbetrieben. Dadurch wird vermieden, dass der Generator Temperaturbereiche erreicht, die ihn schädigen könnten.

Ist die Temperaturprognose positiv, befindet sich die erwartete Generatortemperatur unterhalb des Generatortemperatur-Schwellenwerts, wird geprüft, ob die Generatorfrequenz oberhalb eines Generatorfrequenz-Schwellenwerts liegt. Ist dies nicht der Fall, wird das Kühlsystem ohne Zuschalten der zusätzlichen elektrischen Last weiterbetrieben. Anderenfalls, also bei einer Generatorfrequenz oberhalb des Schwellenwerts wird die zusätzliche elektrische Last dem Kühlsystem zugeschalten. Insgesamt wird mit dem Verfahren eine Regelung zum Zuschalten einer zusätzlichen Last in einem Kühlsystem geschaffen, welches die komplexe und ressourcenintensive Berechnung einer aktuell, maximal verfügbaren elektrischen Leistung des Generators nicht mehr erfordert. Darüber hinaus wird mit dem Verfahren der thermische Zustand des Generators berücksichtigt, sodass sich eine erhöhte Betriebssicherheit und eine verbesserte Robustheit des Gesamtsystems ergeben.

Vorzugsweise nutzt das thermische Generatormodell zum Bestimmen einer erwarteten Generatortemperatur neben der zusätzlichen Last die Parameter Umgebungstemperatur, Generatorfrequenz und/oder aktuelle Generatortemperatur. Diese Parameter dienen zu einer genaueren Abbildung des thermischen Generatormodells und führen zu einer besonders belastbaren erwarteten Generatortemperatur.

Gemäß einer weiteren optionalen Fortbildung der Erfindung umfasst das Bestimmen des thermischen Generatormodells ein Berechnen eines thermischen Generatormodells unter Einbeziehung der zusätzlichen elektrischen Last, einer Umgebungstemperatur, einer Generatorfrequenz und/oder der aktuellen Generatortemperatur.

Demnach ist es also möglich, dass das thermische Generatormodell eine mathematische Abbildung darstellt, anhand derer berechnet werden kann, wie sich der Generator hinsichtlich seiner thermischen Eigenschaften entwickeln wird. Die Berechnung dieses Prognosemodells findet dabei vorzugsweise unter Berücksichtigung der zusätzlichen elektrischen Last, einer Umgebungstemperatur, einer Generatorfrequenz und/oder der aktuellen Generatortemperatur statt. Diese Parameter haben alle eine gewisse Auswirkung auf das thermische Generatormodell.

Zudem kann in dem erfindungsgemäßen Verfahren vorgesehen sein, dass nach einem Zuschalten der zusätzlichen Last zu dem Kühlsystem, mindestens ein Parameter des Kühlsystems gemessen wird, der zur Bestimmung des thermischen Generatormodells herangezogen worden ist, der gemessene mindestens eine Parameter mit dem mindestens einen korrespondierenden Parameter, der zur Bestimmung des Generatormodells verwendet wurde, verglichen wird und bei einer aus dem Vergleich gewonnenen Abweichung, insbesondere einer solchen Abweichung, die zu einer Erhöhung der Generatortemperatur beitragen würde, eine Neuberechnung des Generatormodells und eine Neubeurteilung der damit in Verbindung stehenden Prüfungen vorgenommen wird.

Nachdem eine positive Entscheidung über das Zuschalten der elektrischen Last getroffen worden ist, wird ein zum Bestimmen des thermischen Generatormodells herangezogener Parameter gemessen, um zu vergleichen, ob die prognostizierte Entwicklung dieses Parameters von dem tatsächlichen Verlauf dieses Parameters abweicht. Ergibt sich eine solche Abweichung von der Prognose wird das thermische Generatormodell unter Zugrundelegung des tatsächlich gemessenen Parameterwerts neu berechnet und eine Neubeurteilung der damit in Verbindung stehenden Prüfungen vorgenommen.

Es wird also nachdem eine zusätzliche Last zugeschaltet worden ist, beispielsweise der Anstieg des Stroms am Generator gemessen und mit dem thermischen Generatormodell zu Grunde liegenden anfänglichen Erwartungswert verglichen. Ist der tatsächliche Anstieg des Stroms kleiner als der Erwartungswert (=prognostizierte Wert des Stroms, der Einzug in das thermische Generatormodell gefunden hat), wird der Betrieb fortgesetzt. Ist der Anstieg des tatsächlich gemessenen Stroms größer als der Erwartungswert des Stroms (=Prognosewert), wird das thermische Modell mit dem tatsächlichen Stromwert erneut berechnet und eine Neubeurteilung der damit in Verbindung stehenden Prüfungen vorgenommen. Demzufolge wird bei einer dann bestimmten Generatortemperatur, die weiterhin unterhalb des Generatortemperatur-Schwellenwerts liegt, geprüft, ob auch die Generatorfrequenz oberhalb eines Generatorfrequenz-Schwellenwerts liegt. Ist dies der Fall, wird der Betrieb fortgesetzt. Befindet sich die berechnete Generatortemperatur oberhalb des Generatortemperatur-Schwellenwerts oder liegt die Generatorfrequenz unterhalb des Generatorfrequenz-Schwellenwerts, wird die elektrische Last weggeschaltet.

Damit wird sichergestellt, dass auch bei einer fehlerhaften Prognose eines das thermische Generatormodell beeinflussenden Parameters eine zusätzliche elektrische Last nur dauerhaft an dem Generator angeschlossen bleibt, falls dies nicht zu einer oberhalb des Schwellenwerts liegenden Generatortemperatur oder einer unterhalb der Generatorfrequenz-Schwellenwerts liegenden Generatorfrequenz führt. Gemäß einer weiteren Fortbildung bestimmt das thermische Generatormodell ferner die maximal zulässige Zuschaltdauer der zusätzlichen Last und prüft im Vergleich mit einem Schwellenwert, ob die Dauer für ein Zuschalten der zusätzlichen Last ausreichend ist oder nicht. Dies kann bei der Bewertung, ob ein zusätzlicher elektrischer Verbraucher einzuschalten ist, herangezogen werden. So kann beispielsweise entschieden werden, dass bei einem Unterschreiten des Schwellenwerts für die Zuschaltdauer der Nutzen dieses nur kurzen Zuschaltens des elektrischen Verbrauchers nicht groß genug ist, um tatsächlich ein Zuschalten des Verbrauchers zu veranlassen.

Vorzugsweise wird bei der Bewertung, ob ein elektrischer Verbraucher zugeschaltet wird, die maximal zulässige Zuschaltdauer herangezogen.

Gemäß einer weiteren Ausführungsform der Erfindung wird nach einem Zuschalten der zusätzlichen elektrischen Last zu dem Kühlsystem die tatsächliche Last des Generators festgestellt und mit der erwarteten Last des Generators verglichen.

Hierbei ist es von Vorteil, wenn festgestellt wird, dass die tatsächliche Last größer als die erwartete Last ist, das thermische Generatormodell unter Zuhilfenahme der tatsächlichen Last anstelle der erwarteten Last erneut zu bestimmen eine Neubeurteilung der damit in Verbindung stehenden Prüfungen vorzunehmen.

Weiter ist hierbei von Vorteil, wenn festgestellt wird, dass das thermische Generatormodell, welches die tatsächliche Last berücksichtigt eine erwartete Generatortemperatur ergibt, die oberhalb des Generatortemperatur-Schwellenwerts liegt, die zusätzliche elektrische Last vom Generator zu trennen.

Erfindungsgemäß enthält das thermische Generatormodell einen Korrekturfaktor, der die bereits geleisteten Arbeitsstunden, das Gesamtalter und/oder die Zeit seit dem letzten Wartungsintervall des Generators berücksichtigt. Damit ist es im Wesentlichen möglich, ein Altern bzw. eine Nutzdauer des Generators zu erkennen, und diese Informationen beim Bestimmen des thermischen Generatormodells zu nutzen.

Gemäß einer Fortbildung der Erfindung ist das Kühlsystem ein Kühlsystem für eine Transporteinheit, insbesondere für einen Kühl-Sattelauflieger, einen Kühlanhänger oder einen Kühltransportcontainer, mit mindestens einer über einen Generator angetriebenen Kühleinheit.

Weitere Vorteile, Merkmale und Details der Erfindung werden anhand der Beschreibung der Figuren ersichtlich. Es zeigen:
- Fig. 1:: ein Ablaufdiagramm des erfindungsgemäßen Verfahrens, und
- Fig. 2:: ein Ablaufdiagramm einer Variation des erfindungsgemäßen Verfahrens.

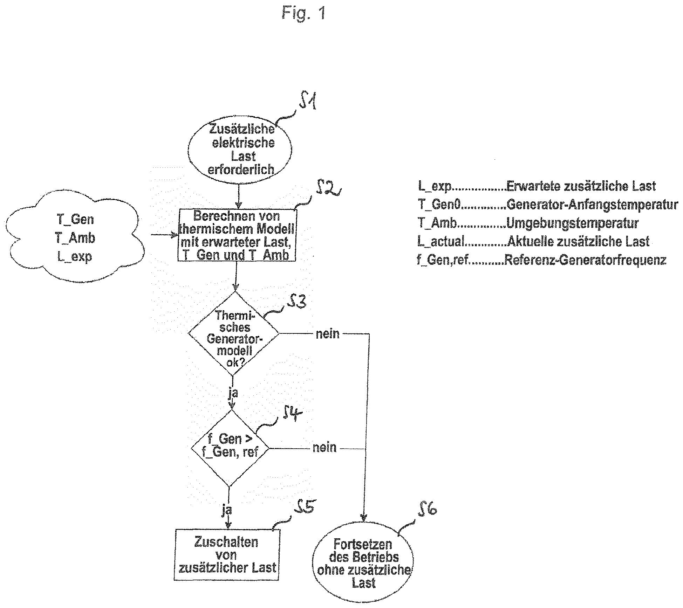

Fig. 1 zeigt ein Ablaufdiagramm des erfindungsgemäßen Verfahrens zum Regeln eines Kühlsystems. In S1 wird der Bedarf für das Zuschalten einer zusätzlichen elektrischen Last erkannt. Daraufhin wird im Schritt S2 das thermische Generatormodell unter Hinzuziehung der aktuellen Temperatur T_Gen, der Last L_exp und der Umgebungstemperatur T_Amb bestimmt. Nach dem Bestimmen des thermischen Generatormodells erfolgt in S3 die Prüfung, ob das zu erwartende thermische Generatormodell innerhalb von vorgegebenen Grenzwerten liegt. Beispielsweise wird die Generatortemperatur mit einem Generatortemperatur-Schwellenwert verglichen, und, falls die Generatortemperatur darüber liegt, zu S6 verzweigt, gemäß dem der Betrieb des Kühlsystems ohne Hinzuschalten der zusätzlichen Last weiterbetrieben wird.

Liegt das thermische Generatormodell innerhalb eines zulässigen Wertebereichs, wird in einer folgenden Prüfung im Schritt S4 geprüft, ob die Generatorfrequenz f_Gen größer als ein Generator-Schwellenwert f_Gen,ref ist. Ist dies nicht der Fall, wird zu dem Schritt S6 verzweigt, gemäß dem der Betrieb des Kühlsystems ohne die zusätzliche Last fortgeführt wird. Erfüllt die Generatorfrequenz f_Gen die Bedingung, wird die zusätzliche Last gemäß dem Schritt S5 dem Generator bzw. dem Kühlsystem zugeschaltet.

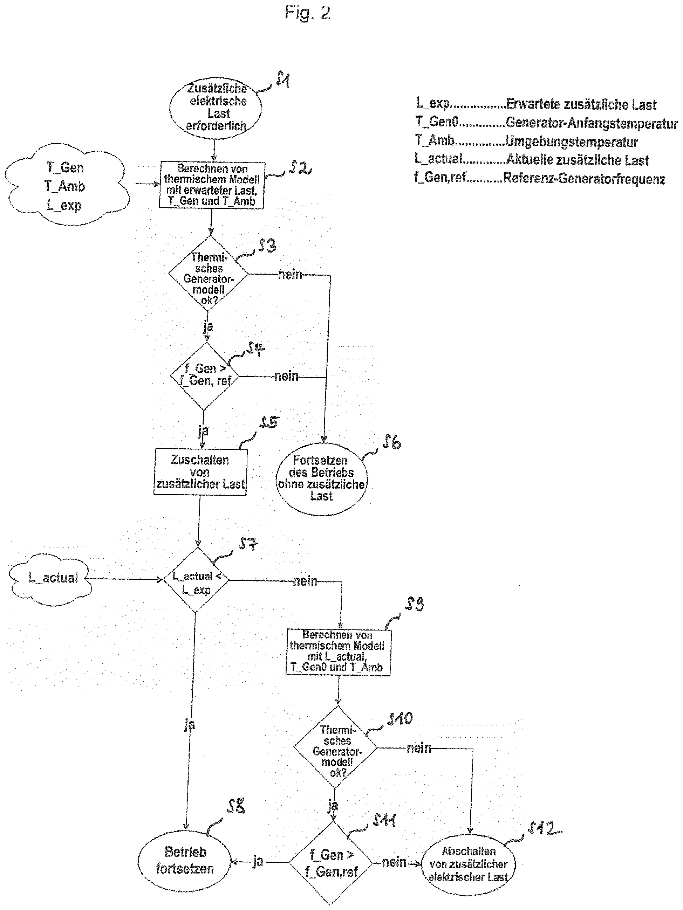

Fig. 2 zeigt eine Fortbildung des in Fig. 1 dargestellten Verfahrens. Hierbei schließt sich an das Zuschalten der zusätzlichen Last im Schritt S5 eine weitere Prüfung an, die im Schritt S7 prüft, ob die aktuelle Last L_actual kleiner ist als die dem Generatormodell zu Grunde liegende Last L_exp. Ist die gemessene Last L_actual kleiner als die zur Berechnung des thermischen Generatormodells herangezogene Last L_exp wird der Betrieb des Kühlsystems mit der zusätzlichen Last gemäß Schritt S8 aufrechterhalten.

Ist dies nicht der Fall, ist also die tatsächlich gemessene Last L_actual größer als die berechnete Last L_exp, die in das Generatormodell Eingang gefunden hat, wird eine Neuberechnung des thermischen Generatormodells im Schritt S9 vorgenommen.

Im Anschluss daran wird anhand dieses neu berechneten Generatormodells aus Schritt S9 erneut geprüft, ob das thermische Generatormodell Auffälligkeiten zeigt oder okay ist. So wird beispielsweise im Schritt S10 geprüft, ob die Generatortemperatur unterhalb eines Generatortemperatur-Schwellenwerts liegt. Ist dies nicht der Fall, wird zum Schritt S12 verzweigt und die hinzugeschaltete zusätzliche Last weggeschaltet. Erfüllt die Generatortemperatur die im Schritt S10 gestellten Anforderungen, wird in die Prüfung des Schritts S11 verzweigt. Hier erfolgt ähnlich wie im Schritt S4 eine Prüfung, ob die Generatorfrequenz größer einen Generatorfrequenz-Schwellenwerts ist. Ist dies der Fall, wird der Betrieb mit einem hinzugeschalteten zusätzlichen elektrischen Verbraucher aufrechterhalten, ist dies nicht der Fall, wird die hinzugeschaltete zusätzliche Last weggeschaltet.

## Patentansprüche

1. Verfahren zum Regeln eines Kühlsystems wobei in dem Verfahren:
ein Bedarf festgestellt wird, dem Kühlsystem eine zusätzliche elektrische Last zuzuschalten,
**dadurch gekennzeichnet, dass**
eine erwartete Generatortemperatur eines Generators des Kühlsystems auf Grundlage eines thermischen Generatormodells unter Einbeziehung der zusätzlichen elektrischen Last bestimmt wird,
geprüft wird, ob die erwartete Generatortemperatur unterhalb eines Generatortemperatur-Schwellenwerts liegt, und falls dies nicht der Fall ist, das Kühlsystem ohne ein Zuschalten der zusätzlichen elektrischen Last weiterbetrieben wird,
falls die erwartete Generatortemperatur unterhalb eines Generatortemperatur-Schwellenwerts liegt, geprüft wird, ob eine Generatorfrequenz oberhalb eines Generatorfrequenz-Schwellenwerts liegt, und falls dies nicht der Fall ist, das Kühlsystem ohne ein Zuschalten der zusätzlichen elektrischen Last weiterbetrieben wird, und
falls die Generatorfrequenz oberhalb eines Generatorfrequenz-Schwellenwerts liegt, die zusätzliche elektrische Last dem Kühlsystem zugeschaltet wird, wobei
das thermische Generatormodell einen Korrekturfaktor enthält, der die bereits geleisteten Arbeitsstunden, das Gesamtalter und/oder die Zeit seit dem letzten Wartungsintervall des Generators berücksichtigt.

2. Verfahren nach Anspruch 1, wobei das thermische Generatormodell zum Bestimmen einer erwarteten Generatortemperatur neben der zusätzlichen Last (L_exp) die Parameter Umgebungstemperatur (T_Amb), Generatorfrequenz (f_Gen) und/oder aktuelle Generatortemperatur (T_Gen) nutzt.

3. Verfahren nach einem der vorhergehenden Ansprüche, wobei das Bestimmen des thermischen Generatormodells ein Berechnen eines thermischen Generatormodells unter Einbeziehung der zusätzlichen elektrischen Last (L_exp), einer Umgebungstemperatur (T_Amb), einer Generatorfrequenz (f_Gen) und/oder der aktuellen Generatortemperatur (T_Gen) umfasst.

4. Verfahren nach einem der vorhergehenden Ansprüche, wobei nach dem Zuschalten der zusätzlichen Last zu dem Kühlsystem,
mindestens ein Parameter des Kühlsystems gemessen wird, der zur Bestimmung des thermischen Generatormodells herangezogen worden ist,
der gemessene mindestens eine Parameter mit dem mindestens einen korrespondierenden Parameter, der zur Bestimmung des thermischen Generatormodells verwendet wurde, verglichen wird, und
bei einer aus dem Vergleich resultierenden Abweichung, insbesondere einer solchen, die laut thermischen Generatormodell zu einer Erhöhung der Generatortemperatur beitragen würde, eine Neuberechnung des Generatormodells und eine Neubeurteilung der damit in Verbindung stehenden Prüfungen vorgenommen wird.

5. Verfahren nach einem der vorhergehenden Ansprüche, wobei das thermische Generatormodell ferner die maximal zulässige Zuschaltdauer der zusätzlichen Last bestimmt und durch Vergleich mit einem Schwellenwert für die Zuschaltdauer geprüft wird, ob die Dauer für ein Zuschalten der zusätzlichen Last ausreichend ist oder nicht.

6. Verfahren nach Anspruch 5, wobei bei der Bewertung, ob ein elektrischer Verbraucher zugeschaltet wird, die maximal zulässige Zuschaltdauer herangezogen wird.

7. Verfahren nach einem der vorhergehenden Ansprüche, wobei nach dem Zuschalten der zusätzlichen elektrischen Last zu dem Kühlsystem die tatsächliche Last, vorzugsweise die tatsächliche zusätzliche Last, festgestellt und mit der erwarteten Last verglichen wird.

8. Verfahren nach Anspruch 7, wobei, wenn festgestellt wird, dass die tatsächliche Last größer als die erwartete Last ist, das thermische Generatormodell unter Zuhilfenahme der tatsächlichen Last anstelle der erwarteten Last erneut bestimmt wird und eine Neubeurteilung der damit in Verbindung stehenden Prüfungen vorgenommen wird.

9. Verfahren nach Anspruch 8, wobei, wenn festgestellt wird, dass das thermische Generatormodell, welches die tatsächliche Last berücksichtigt, eine erwartete Generatortemperatur ergibt, welche oberhalb des Generatortemperatur-Schwellenwerts liegt, die zusätzliche elektrische Last vom Generator getrennt wird.

10. Verfahren nach einem der vorhergehenden Ansprüche, wobei das Kühlsystem ein Kühlsystem für eine Transporteinheit, insbesondere für einen Kühl-Sattelauflieger, einen Kühlanhänger oder einen Kühltransportcontainer, mit mindestens einer über einen Generator angetriebenen Kühleinheit, ist.

## Claims

1. A method for regulating a cooling system, wherein in the method:
a requirement to connect an additional electrical load to the cooling system is established,
**characterised in that**
an expected generator temperature of a generator of the cooling system is determined on the basis of a thermal generator model, taking into account the additional electrical load,
it is checked whether the expected generator temperature lies below a generator-temperature threshold value, and if this is not the case the cooling system continues to be operated without the additional electrical load being connected,
if the expected generator temperature lies below a generator-temperature threshold value, it is checked whether a generator frequency lies above a generator-frequency threshold value, and if this is not the case the cooling system continues to be operated without the additional electrical load being connected, and
if the generator frequency lies above a generator-frequency threshold value, the additional electrical load is connected to the cooling system, wherein
the thermal generator model contains a correction factor which takes into consideration the working hours already completed, the overall age and/or the time since the last maintenance interval of the generator.

2. A method according to Claim 1, wherein the thermal generator model utilises the parameters ambient temperature (T_Amb), generator frequency (f_Gen) and/or current generator temperature (T_Gen) in addition to the additional load (L_exp) to determine an expected generator temperature.

3. A method according to one of the preceding claims, wherein the determining of the thermal generator model comprises calculating a thermal generator model taking into account the additional electrical load (L_exp), an ambient temperature (T_Amb), a generator frequency (f_Gen) and/or the current generator temperature (T_Gen).

4. A method according to one of the preceding claims, wherein once the additional load has been connected to the cooling system
at least one parameter of the cooling system which has been used for determining the thermal generator model is measured,
the measured at least one parameter is compared with the at least one corresponding parameter which has been used for determining the thermal generator model, and
in the event of a deviation resulting from the comparison, in particular a deviation which according to the thermal generator model would contribute to an increase in the generator temperature, recalculation of the generator model and reassessment of the checks associated therewith is performed.

5. A method according to one of the preceding claims, wherein the thermal generator model further determines the maximum permissible connection duration for the additional load and by comparison with a threshold value for the connection duration it is checked whether the duration for connecting the additional load is sufficient or not.

6. A method according to Claim 5, wherein the maximum permissible connection duration is used in assessing whether an electrical consumer becomes connected.

7. A method according to one of the preceding claims, wherein once the additional electrical load has been connected to the cooling system the actual load, preferably the actual additional load, is established and compared with the expected load.

8. A method according to Claim 7, wherein, if it is established that the actual load is greater than the expected load, the thermal generator model is determined anew with the aid of the actual load instead of the expected load and reassessment of the checks associated therewith is performed.

9. A method according to Claim 8, wherein, if it is established that the thermal generator model which takes into consideration the actual load yields an expected generator temperature which lies above the generator-temperature threshold value, the additional electrical load is disconnected from the generator.

10. A method according to one of the preceding claims, wherein the cooling system is a cooling system for a transport unit, in particular for a refrigerated semitrailer, a refrigerated trailer or a refrigerated transport container, with at least one cooling unit which is driven by way of a generator.

## Revendications

1. Procédé servant à réguler un système de refroidissement, dans lequel dans le procédé :
un besoin d'amener une charge électrique supplémentaire au système de refroidissement pour mise en circuit est relevé,
**caractérisé en ce que**
une température de générateur attendue d'un générateur du système de refroidissement est définie sur la base d'un modèle de générateur thermique en intégrant la charge électrique supplémentaire,
il est vérifié si la température de générateur attendue est inférieure à une valeur de seuil de température de générateur, et si cela n'est pas le cas, le système de refroidissement continue à fonctionner sans une mise en circuit de la charge électrique supplémentaire,
si la température de générateur attendue est inférieure à une valeur de seuil de température de générateur, il est vérifié si une fréquence de générateur est supérieure à une valeur de seuil de fréquence de générateur, et si cela n'est pas le cas, le système de refroidissement continue à fonctionner sans une mise en circuit de la charge électrique supplémentaire, et
si la fréquence de générateur est supérieure à une valeur de seuil de fréquence de générateur, la charge électrique supplémentaire est amenée au système de refroidissement pour mise en circuit, dans lequel
le modèle de générateur thermique contient un facteur de correction, qui tient compte des heures de travail déjà fournies, de l'âge total et/ou du temps depuis le dernier intervalle de maintenance du générateur.

2. Procédé selon la revendication 1, dans lequel le modèle de générateur thermique utilise pour définir une température de générateur attendue, outre la charge supplémentaire (L_exp), les paramètres température ambiante (T_Amb), fréquence de générateur (f_Gen) et/ou température de générateur instantanée (T_Gen).

3. Procédé selon l'une quelconque des revendications précédentes, dans lequel la définition du modèle de générateur thermique comprend un calcul d'un modèle de générateur thermique en intégrant la charge électrique supplémentaire (L_exp), une température ambiante (T_Amb), une fréquence de générateur (f_Gen) et/ou la température de générateur instantanée (T_Gen).

4. Procédé selon l'une quelconque des revendications précédentes, dans lequel après l'amenée de la charge supplémentaire au système de refroidissement pour mise en circuit,
au moins un paramètre du système de refroidissement, qui a été pris en compte pour définir le modèle de générateur thermique, est mesuré,
l'au moins un paramètre mesuré est comparé à l'au moins un paramètre correspondant, qui a été utilisé pour définir le modèle de générateur thermique, et
dans le cas d'un écart résultant de la comparaison, en particulier d'un écart tel, qui contribuerait, selon le modèle de générateur thermique, à une augmentation de la température de générateur, un nouveau calcul du modèle de générateur et une nouvelle appréciation des vérifications y afférentes sont réalisés.

5. Procédé selon l'une quelconque des revendications précédentes, dans lequel le modèle de générateur thermique définit en outre la durée de mise en circuit admise au maximum de la charge supplémentaire et il est vérifié par la comparaison à une valeur de seuil pour la durée de mise en circuit si la durée est suffisante ou non pour une mise en circuit de la charge supplémentaire.

6. Procédé selon la revendication 5, dans lequel lors de l'évaluation pour savoir si un consommateur électrique est mis en circuit, la durée de mise en circuit admise au maximum est prise en compte.

7. Procédé selon l'une quelconque des revendications précédentes, dans lequel après l'amenée de la charge électrique supplémentaire au système de refroidissement pour mise en circuit, la charge réelle, de préférence la charge supplémentaire réelle, est relevée et est comparée à la charge attendue.

8. Procédé selon la revendication 7, dans lequel s'il est constaté que la charge réelle est supérieure à la charge attendue, le modèle de générateur thermique est à nouveau défini à l'aide de la charge supplémentaire en lieu et place de la charge attendue et une nouvelle appréciation des vérifications y afférentes est réalisée.

9. Procédé selon la revendication 8, dans lequel, s'il est constaté que le modèle de générateur thermique, lequel tient compte de la charge réelle, donne lieu à une température de générateur attendue qui est supérieure à la valeur de seuil de température de générateur, la charge électrique supplémentaire est séparée du générateur.

10. Procédé selon l'une quelconque des revendications précédentes, dans lequel le système de refroidissement est un système de refroidissement pour une unité de transport, en particulier pour un semi-remorque frigorifique, une remorque frigorifique ou un conteneur de transport frigorifique, avec au moins une unité de refroidissement entraînée par l'intermédiaire d'un générateur.
